# EUROPEAN PATENT APPLICATION

(11) **EP 3 056 839 A1**
(43) Date of publication of application: **17.08.2016**
(21) Application number: 13894630.6
(22) Date of filing: 24.09.2013
(51) Int. Cl.: F25B 30/00, F24J 3/08, F25B 13/00

(54) **MODULAR HYDROTHERMAL SYSTEM AND METHOD FOR THE OPERATION THEREOF**

(71) Applicant: Energen Chile S.A., Santiago (CL)
(72) Inventor: CASTAÑEDA VIVEROS, Jorge Andrés, Santiago (CL)
(74) Representative: Sugrañes Patentes y Marcas
(86) International application number: PCT/CL2013/000068
(87) International publication number: WO 2015/042728

(57) **Abstract**

This invention applies to the technical field of home and industrial heat exchangers to control and handle the temperature from water accumulating devices both open and closed such as swimming pools; and the control and handling of temperatures in buildings and/or other devices located near the water accumulator device. This invention corresponds to a heat exchanger system including a first device comprised by one or several water volumes in ponds, both open and closed, both natural and artificial such that it works as a heat battery; a primary heat exchanger device removable and/or fixed; a secondary device with a hydrothermal heat pump; a control device to handle flows and temperature; a tertiary device of closed water volume for the sanitary water and/or a heating slab, and/or radiators, and/or solar collectors and/or devices where to irradiate heat or cold. One of the objectives of this system is to keep the temperature both of the buildings and the external water volume in an adequate fashion for human use. Another objective of this invention is to recover energy in the form of kilocalories from a liquid water volume to be applied as temperature in a building and/or another water volume and/or where a thermostatting of an area is required. The system also protects its operation method.

## Description

### Field of application

This invention applies to the technical field of heat exchangers of home or industrial use for the extraction or transfer of energy from water accumulator devices both open and closed, natural or artificial, such as swimming pools; and the control and handling of temperature in infrastructures and/or other devices located near the water accumulator device that require thermostatting.

### State of the art description

This system was developed with the purpose of solving the energy requirements in homes and industries in terms of thermostatting such as heating, cooling and hot water production.

The above is strictly based on the present requirements for energy efficiency and environments free of contamination.

It has long been known that because of the water density water mirrors are capable of accumulating and releasing temperature slowly. It is well known that when a swimming pool has been exposed all day to solar radiation it remains warm during the first hours of the night. This phenomenon is in virtue of the density of the water because as it is denser than air (800 times denser) it can keep this energy in its structure. On the other hand, the soil that embeds the container, in case it is buried, provides calories that are absorbed by the water.

Some developments based on heat exchangers can be seen in air conditioning and refrigerators patents, some of these developments have control devices in temperature ranges in air conditioners such as the European patent EP2420758, but they do not have an integrated system with the heat supply of a water accumulator near the place where the conditioning of the temperature is needed. On the other hand, most of the patents mentioned herein refer to closed systems with which heat is exchanged; if this wasn't so and these systems were open, their heat exchangers would become highly inefficient for operating in tight temperature ranges. Other patents related to these issues are EP2541169 and EP2180263.

When analyzing swimming pools with heating systems passive heater systems may be found based on solar energy such as EP1806545, EP0493254 and EP0263097. These systems are used to heat directly a swimming pool and not to use the energy that the first water volume naturally captures in its liquid state to heat or cool another building and/or another water volume.

The definition of water in this invention refers to H₂O or water in its liquid state, independently whether its surface or part of it is in solid or gas state. Any type of water is chemically considered among which we can mention drinking water with high or low hardness, liquid residues water, sea water, underground water, lakes and rivers water, mineral waters, distilled water, demineralized water, filtered water by reverse osmosis or other media, among others.

In relation with the use of swimming pools and heat exchangers the following American patent may be found WO2012045166 which presents a heat exchanger system via a heater of the manure or compost type which sets apart from the application it has in the thin control of temperature in an open or closed water container.

### General Description of the Invention

It should be noted that the use here and within the whole text that the singular form does not exclude the plural form, except when the context clearly implies it. Then, for example, the reference to an "element" is a reference to one or more elements and includes equivalent forms known by those skilled in the art. Similarly, as another example, the reference to "a step", "a stage" or "a way" is a reference to one or more steps, stages or ways and that may include sub-steps, stages or ways implicit and/or arising.

All conjunctions used should be understood in its less possible restrictive - more inclusive- sense. For example, the conjunction "or" should be understood in its orthodox logic sense and not as an "excluding or", except that the context or the text expressly needs it or indicates it. The structures, materials and/or elements described should be understood as also referring to those functionally equivalent and thus avoid endless restricted enumerations.

The expressions used to indicate approximations or conceptualizations should be understood as like except where the context demands a different interpretation.

All names and technical and/or scientific expressions used herein have the common meaning used by an ordinary person qualified in these subjects except when expressly indicated otherwise.

The methods, techniques, devices, systems, equipment and other materials are described although methods, techniques, devices, systems equipment and materials similar and/or equivalent to those described may be used or preferred in the practice and/or in trials of the present invention.

The structures described herein should also be understood as referred to any similar or functionally equivalent structure.

All patents and other publications such as references were previously included to describe and/or inform for example the methodologies described in said publications that might be useful in relation with this invention. These publications are solely included because of the information contained prior to the filing date of this patent application.

Using the basic principle of using existent energy sources in homes or industries we specifically focused on having those sources available in home swimming pools and/or water accumulators and/or natural sources located near the building such as the patio, garden, beach, lakes surroundings, natural or artificial water mirrors' surroundings, among others.

In general, any natural or artificial accumulated water volume used for human consumption, production process or recreation (swimming pools) works physically as an energy battery, meaning that it can store and keep large amounts of calories during periods of time.

This stored energy may be used to thermostate with heating or cooling different constructions, other water volumes or some area that needs thermostatting and also in producing hot water to satisfy certain requirements. One of the main applications is in home swimming pools without discarding the same use in another type of applications.

The container of a water volume (swimming pool, natural or artificial waters or industrial accumulation ponds), specifically the water stored therein absorbs energy which is expressed by its temperature from its direct contact with the ground, air and solar radiation.

The water volume stored with a certain temperature is equivalent to an energetic volume.

The energetic ratio is that for every litre of water that increases or reduces 1 °C, 1,000 calories are obtained.

When analyzing from an energetic standpoint 1 °C in a 30 m³ water container is equivalent to 30,000 Kcal (kilocalories), which in turn is equivalent to 35 Kw/h.

This is 2.9 times what a 200 m² house or building needs for heating. The energy requirements in terms of heating for a house depends on the isolation level said house has. As per empirical data a 200 m² house with standard isolation can be heated with 12 Kw/h.

The energy so obtained from the swimming pool is recovered from the ground, air and solar radiation.

Consequently, if it is possible to extract energy from a water volume like a swimming pool to cover the energy needs in a home in terms of heating and hot water, recovering said energy in the swimming pool from the contact with the ground, with the air and the solar radiation, would be a highly efficient and sustainable process.

### Description of the specific system

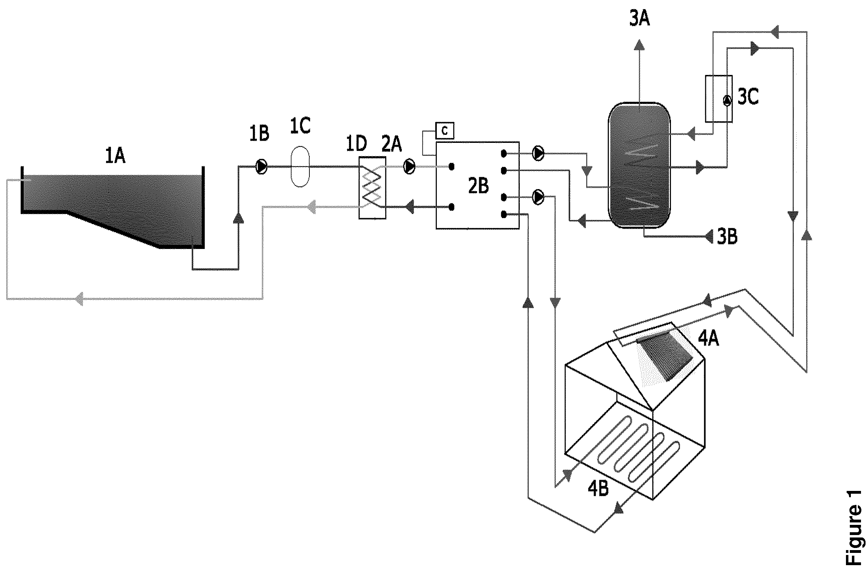

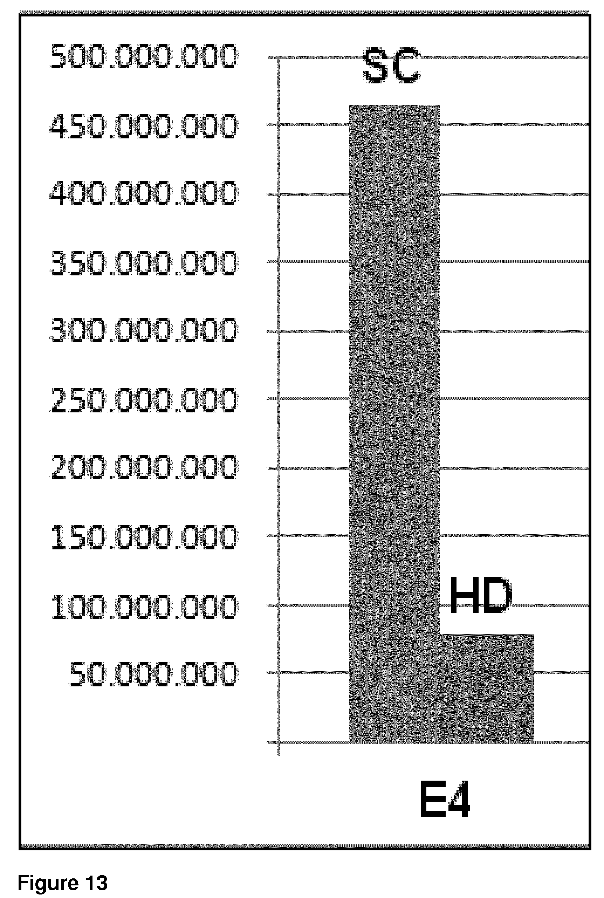

The system comprises five devices defined as: one primary circuit device; one secondary circuit device, a tertiary circuit device; an auxiliary device and a control device as can be seen in figure 1/13.

The primary circuit device comprises a water volume that may or not be watertight with continuous circulation or recirculation, that may or not be buried although preferably that is buried, this can include swimming pools, ponds, sea, lakes, rivers, natural or artificial water mirrors, among others.

One of the characteristics that may or not have this device is a filter after the recirculation pump, preferably a filter to have water in an optimal condition to exchange temperature is required, although it is not mutually exclusive.

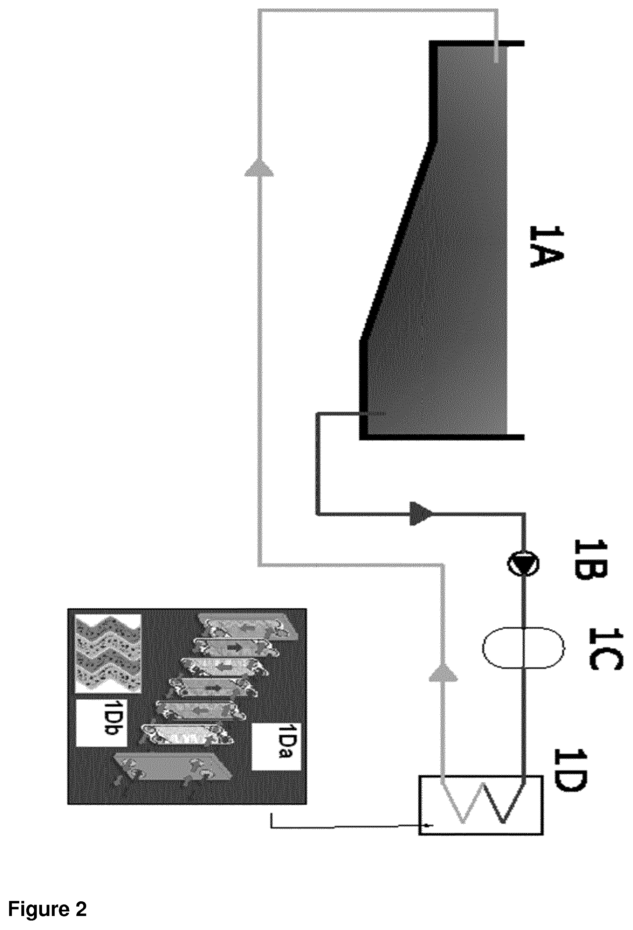

Another part of the primary circuit is a water recirculation pump which recirculates or circulates water driven through a filter towards the last part of the primary circuit device that includes a heat exchanger (exchangeable) to be returned to the initial water volume, i.e. the water just circulates, exits and enters into its original volume. All this description is clearly described by figure 2/13.

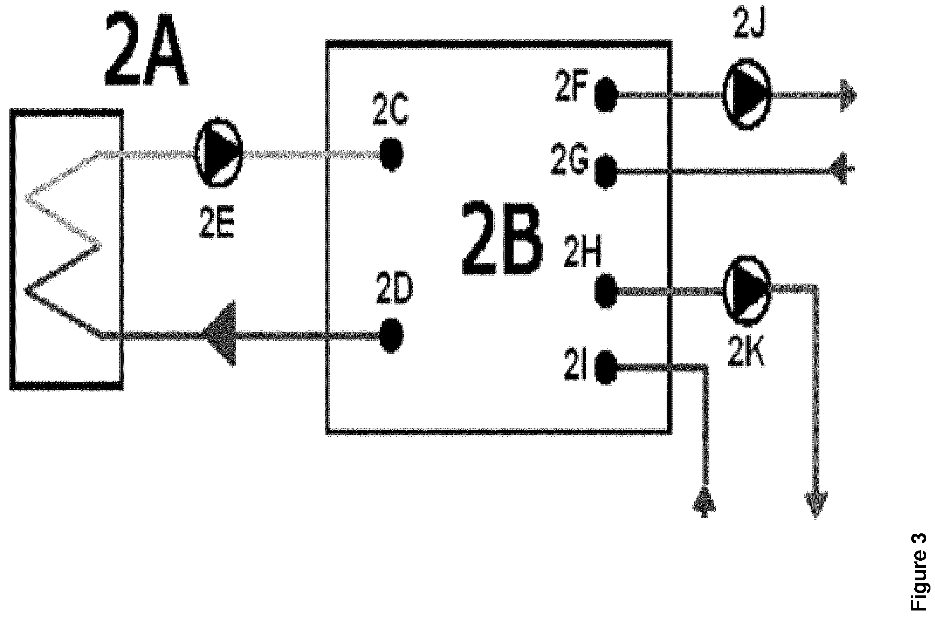

When passing through the heat exchanger (figure 2/13, 1D) the water transfers the circulating water volume energy to the secondary circuit device (figure 3/13, 2A) which comprises a closed circuit filled with a fluid that is an anti-freezing mixture to prevent the solidification of the fluid in the secondary circuit. This type of fluids includes mixtures of water with anti-freezing; anti-freezing alone, oils, liquid silicones, liquefied gases, heat exchangers special fluids, special gases for heat exchanging (fluorocarbons, among others) and any other element that allows the exchange of heat in a ratio that will depend on the specified freezing point which as an example for this design is established in (-10 °C) without restricting other lower or higher temperatures. The preferred ratio used for this specific case is 30% anti-freezing with water, which will be explained later on.

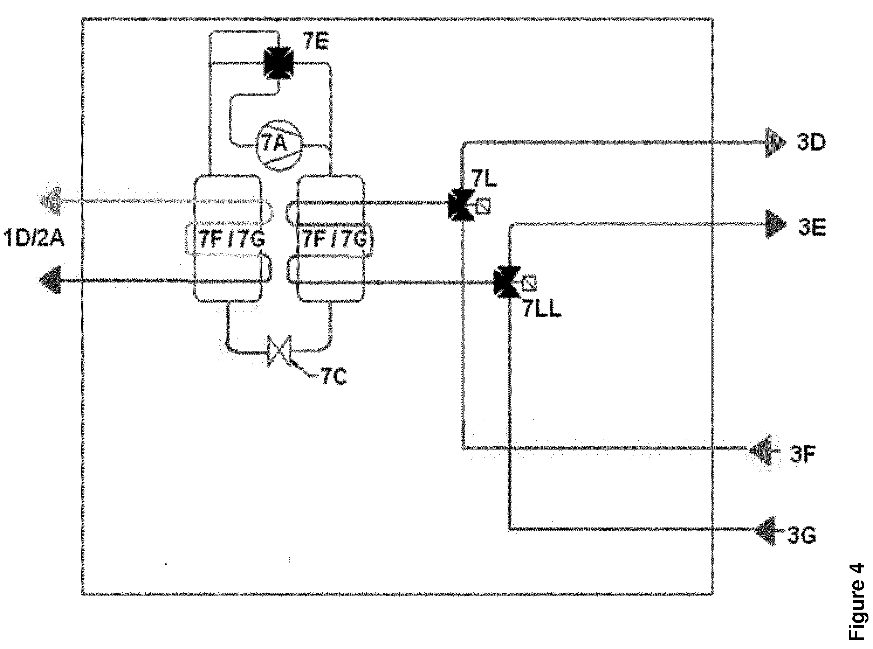

This second secondary circuit device (figure 3/13) that includes a liquid volume within a closed circuit also includes a second circulating pump and a hydrothermal heat pump where all the fluid of the devices passes. The hydrothermal heat pump (figure 4/13) obtains the energy from the circulating fluid of the secondary circuit, deducting from this liquid a rate between 1 and 20 °C, preferably between 2 and 3 °C, which are obtained from the primary circuit where the water of the swimming pool circulates, deducting also a rate between 1 and 20 °C, preferably between 2 and 3 °C.

Thereby it is possible to work to a water temperature in the swimming pool slightly over the freezing point, i.e. slightly over 0 °C (which for the purposes of this invention is named 0 °C+).

In order to better present the thermal differences in the flows of the volumes in the different circuits' devices it is important to explain the freezing process of the water:
- To decrease 1 °C in one litre of water, 1,000 calories should be subtracted, i.e. to decrease the temperature from 1 °C to 0 °C 1,000 calories should be subtracted.
- Anyhow, to make the water change its state from liquid to solid, to this same kg of water 80,000 calories should be subtracted.

The former means that it is completely feasible to operate with a swimming pool water temperature slightly over 0 °C.

Given that the environment, air, ground and solar radiation average temperature during 24 hours of a common day in cities with Mediterranean weather such as Santiago de Chile (without excluding other cities with extreme weather) in the coldest winter days is higher than 5 °C, this means that the environment, air, ground and solar radiation provide enough energy to the water in the swimming pool so its upper layers will not freeze or even not freeze at all.

The hydrothermal heat pump (figure 4/13) uses the physical principle of Carnot thermal cycle to transfer energy modifying the ideal gas law factors. This means that when modifying the pressure and keeping a constant volume, the temperature is modified thereby transferring the same energy obtained from the water volume in the primary circuit device (such like a swimming pool) although with a different temperature.

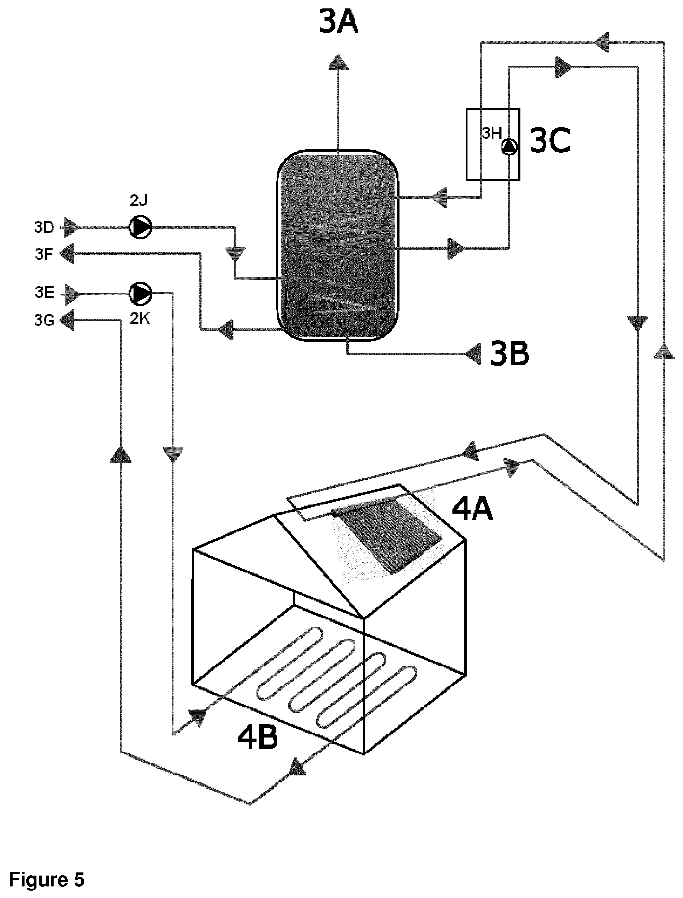

As a result, in order to transfer this energy, the third tertiary circuit device (figure 5/13) comprising the exit of the hydrothermal heat pump towards the radiant element of the construction (figure 5/13, 4B), house and/or to a hot water accumulating tank (figure 5/13, 3A) and/or another water volume and/or another application in an area to thermostate.

The fluid contained in the tertiary circuit can be water alone and/or with the same characteristics to those used in the secondary circuit.

In other words, the tertiary circuit device includes the radiant element of the construction (slab heating, wall radiators) and/or the internal coil of a hot water accumulation tank connected to the exit of the hydrothermal heat pump.

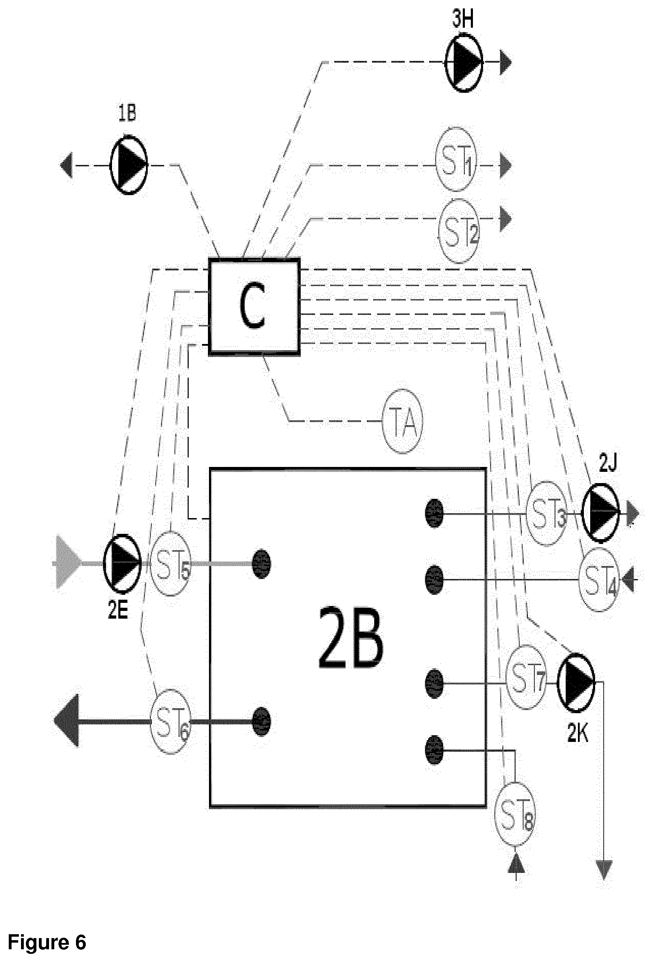

The control device (figure 6/13) is handled digitally, was built specially to operate the rest of the devices and works with a logic program stored with a control algorithm that allows the operation of the hydrothermal heat pump compressor in the secondary circulating device. The control algorithm obtains the data from sensors located in each entry/exit element of the fluids circulation of the hydrothermal heat pump and makes a very tight control of temperature fluctuations.

Finally, and with the purpose of making the energy supply more efficient, the auxiliary device specific to heat the sanitary water may or not include a solar collector (figure 5/13, 4A) which operates as a complement of the system previously described.

Without restricting the sanitary water thermostatting, this system may also thermostate another water volume such as a swimming pool that needs to be tempered or any tank containing fluids that needs to be tempered.

This way the integration of all these systems allows the efficient supply of all the energy that a building requires, preferably of a home along the year, heating in winter, hot water all year round and home cooling in summer.

Figure 1/13 is a complete schematic presentation of the Modular Hydrothermal system.

Some specific characteristics of the system are that the water within the watertight water volume or with flow may operate in a broad range of temperatures, preferably until before the freezing point, normally 0 °C to 1 °C.

In the worse scenarios for cities with Mediterranean weather we have proved that the water from a pond, such as a swimming pool shows a 2 °C temperature during winter solstice for an open pond that does not receive solar radiation during winter, but that it is in contact with the air and ground.

The ponds like swimming pools that receive radiation besides being in contact with the air and ground, can reach a temperature of 4.5 °C during winter solstice.

The above indicates the most unfavorable operating conditions and it should be considered that this system may operate with swimming pools water temperature of up to 0 °C.

In theory, energy can continue to be supplied with the water in the swimming pool at 0 °C, because in order to reach the freezing point of the liquid water, the energy equivalent to 80 times necessary to decrease 1 °C should be taken away. (This invention is not limited to temperatures below 0 °C, it is only limited by the solidification of the water; while the water remains in liquid state the system can continue to operate.)

And since it is about open systems (swimming pools) in contact with the ground, with the air and with the solar radiation and that the periods of low temperature, such as during the night in Mediterranean weather is only hours, there is no time enough to release the energy to reach the freezing point.

A key element of this system is the heat exchanger of the primary circuit device that is in contact with the secondary circuit device which is sized to produce a fast energy exchange between the primary and secondary circuits devices. This implies that an exchange ratio with a low approach factor in the range of 1 °C to 100 °C, preferably of 1 °C to 3 °C should be obtained, with the possibility of using also different approach factors depending on the volumes and the type of heat exchanger.

The approach factor is defined as the temperature difference between a fluid or any other heat exchanger element such as a fluid within a circuit of the heat exchanger to another fluid in a second circuit of the same heat exchanger.

There is a large variety of types of heat exchangers. For the purposes of this invention and because little noxious and corrosive fluids are used it is feasible to use different types of heat exchangers that can be tubes, plates, welded plates, shell tubes, among others.

The important variables that should be considered to choose the type of heat exchanger are:
- Approach factor
- Primary circuit flow
- Secondary circuit flow
- Tertiary circuit flow

The ratio for the exchange surfaces will depend on the type of heat exchanger.

Generally, the exchangers are dimensioned depending on the capacity of transferring energy, i.e. the capacity of a heat exchanger is specified in the transference of kilocalories.

In order to keep an infrastructure tempered in a range of 15 °C to 30 °C, preferably between 18 °C and 20 °C, a range between 30 Kcal to 100 Kcal per m² should be injected, preferably a range between 50 Kcal and 70 Kcal.

This amount of Kcal transferred will depend on the isolation of the area to be transferred and the delivery capacity of the radiant element.

To achieve this, the way to transfer heat should be considered, whether it is via the air contained in the infrastructure (e.g. radiators), the floor or slab e.g. a slab heating), or forced air injection heated through radiators, among other applications.

All the above mentioned elements are considered within the tertiary circuit.

To order to deliver this energy to the tertiary circuit, the secondary circuit must exchange it with this one by means of the hydrothermal heat pump that works as follows:
- To transfer the Kcal to the tertiary circuit another heat exchanger like the one previously described is required, preferably a tube-in-tube exchanger.
- This exchanger will exchange the same range of Kcal set between 30 Kcal to 100 Kcal, preferably a range between 50 Kcal and 70 Kcal set in the gas in the heat pump and the fluid of the tertiary circuit.
- To do the above transfer, the transformation of energy is done as follows: the amount of energy that the gas of the heat machine provides is related to its volume, pressure, temperature and amount, according to the Ideal Gas Law (PV = nRT), leaving constant the amount of internal gas in moles (n) inside the heat pump, the volume of the gas in Litres (V) and being R a constant (0.082 (L x Atm)/K x mol), the system will vary in a direct way as a function of its pressure (Atm) and temperature (°K). This means that if a range of energy between 50 and 70 Kcal is to be transferred with different temperature values, then the pressure should be varied and this function is accomplished by the heat pump compressor.
- In order to the gas to provide an amount of Kcal, it has to be energized previously through the primary circuit and controlled by the variation of pressure.
- To achieve the internal Kilocalories exchange of the secondary circuit, the transfer of the necessary energy from the anti-freezing mixture to the gas should be done.

All these exchange processes should occur as instantaneously as possible so that the heat pump may work based on small and tight temperatures (thereby saving energy, which is one of the objectives of this patent).

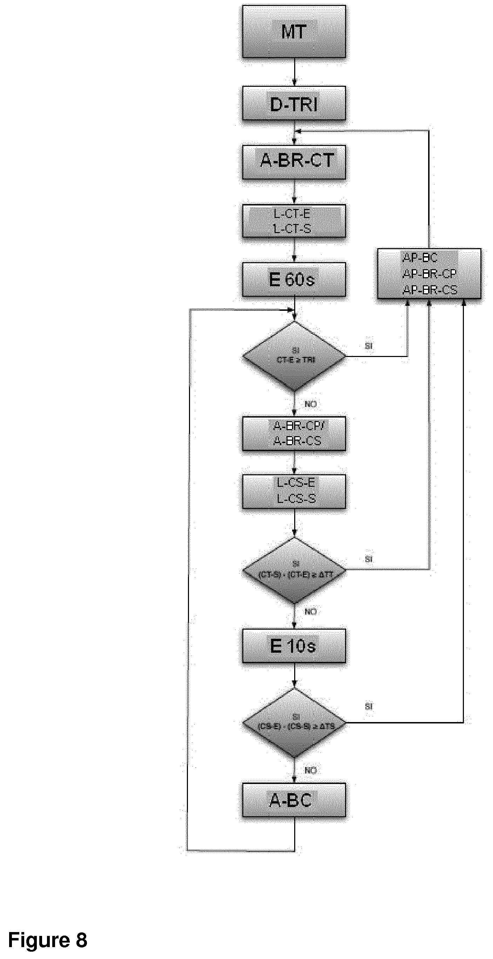

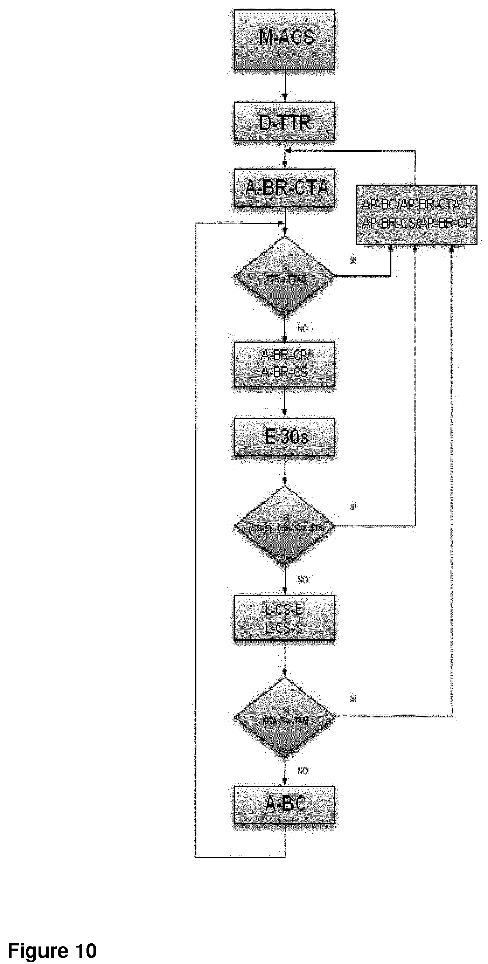

This tight control is achieved using a digital automatic control system as described in figures 8/13, 9/13 and 10/13, depending on the type of control required.

A second key element is the composition of the fluid of the secondary circuit which includes, within the possible mixtures, a mixture of anti-freezing with water in order to foster the freezing point below 10 °C. As an example a mixture of 30% propylene glycol can be used because it offers a freezing point at -12 °C. This does not discard the use of some other fluid with low melting point such as oils, waxes or mixtures of water with some other compound that decreases its melting point.

A third key element is the constructive characteristic of the hydrothermal heat pump which is of a high quality to provide durability to the system.

When we refer to high quality we aim to describe that it is made by lasting materials that are resistant to abrasion and to mechanical stress.

The key elements of a heat pump are:
- Compressor. The function of the compressor is to compress or expand the gas to transfer the energy with different temperature variables. Compressors of renowned brands are used such as Sanyo or Copeland, among others. Among the models of compressors used, those of screw, more common, of piston, among others, preferably of screw may be used.
- Internal exchangers circuits. All the array of exchangers presented previously may be used: tube, welded plates, plates, shell tube, among others, preferably tub-in-tube exchangers. They can be made of, and this applies to all the exchangers previously described, copper, metal alloys or other metals, polymers, ceramics among others with the capacity of being resistant to corrosion, wear and with an easy thermal conduction.
- Flow control valves for the internal gas of 3 or 4 ways, of ball, membrane, needle, electromagnetic, screw, among other types.
- Mother plate of digital control provides digital control by a program or algorithm stored which acts on the compressor commanding the start-up or stop, it acts on the valve of 3 or 4 ways to control the transfer of the internal gas and to control the thermal cycle of heat or cold, it acts on the recirculation pump of the primary circuit commanding the start-up or stop, it acts on the recirculation pump of the secondary circuit commanding the start-up or stop, it acts on the recirculation pump of the tertiary circuit commanding the start-up or stop, it acts on the recirculation pump of the tertiary circuit of the sanitary hot water commanding the start-up or stop and it acts on the recirculation pump of the auxiliary device commanding the start-up or stop. It provides a man - machine interface for the easy handling of the whole system.
- All the use of the energy (in Kilocalories) of these equipment (electrical) has a minimum operational ratio of between 1:3 and 1:5 with respect to the amount of energy provided to the target infrastructure to temper, the rest of the energy is supplied by the water volume, e.g. a swimming pool.
- Temperature measuring sensor located in each fluid flow entry and exit points. These sensors provide the automatic control system (mother plate) with the variable of temperature to generate a tight operation control of the whole integral system.
- The automatic control is designed so that all the ingoing and outgoing temperatures of each primary, secondary and tertiary circuits are kept with a low approach factor, between 1 °C to 15 °C, preferably 1 °C to 5 °C.

The last key element is precisely the water volume to use, such as a swimming pool or a natural volume.

The capacity that it will have to exchange heat with the facility near to the water volume container like a swimming pool, without excluding natural water volumes like the sea, rivers, lakes, underground water, among others, will depend on its size.

### System operation procedure

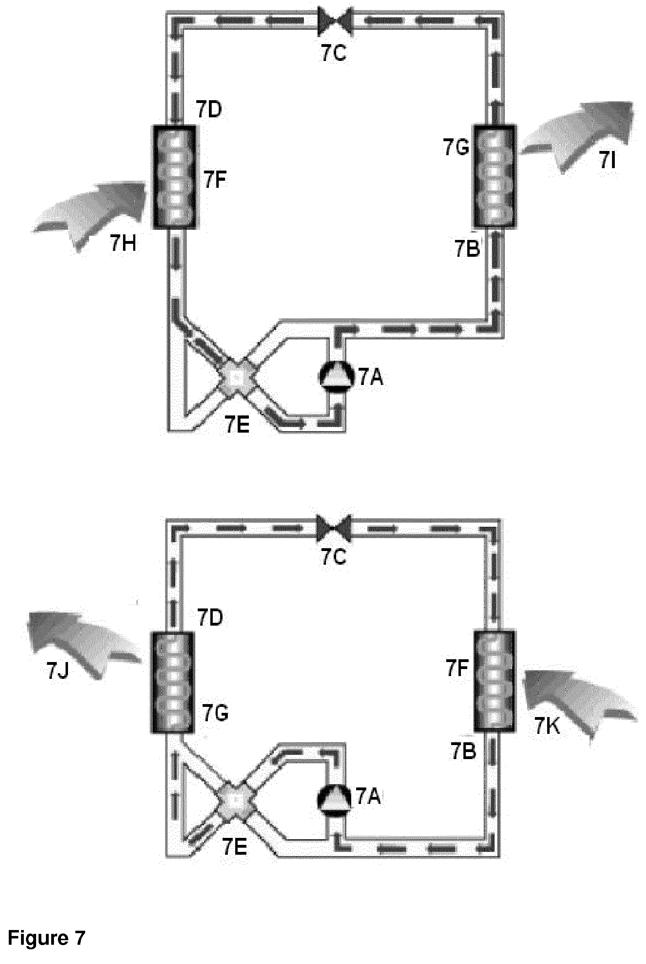

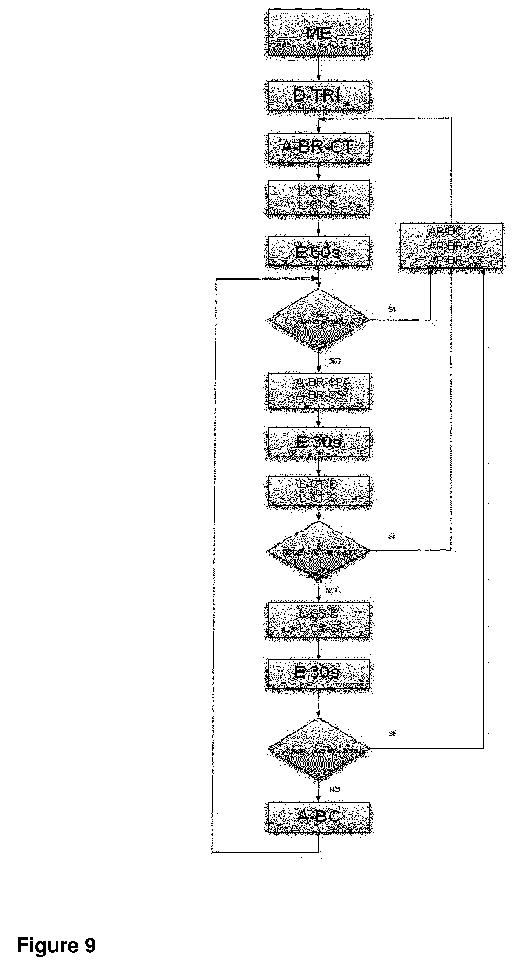

The procedure to operate the system cat be split in two operations:
- Heating Operation (as described conceptually in figure 7/13 and specifically in figures 8/13 and 10/13).
- Cooling Operation, (as described conceptually in figure 7/13 and specifically in figure 9/13).

The two operations with their respective processes are described below.

### Heating process description for the infrastructure close to the water container.

The heating process is characterized in that it obtains the energy from the water container, such as a swimming pool and transferring it to the building.

The water in the container that is part of the primary circuit device is sucked up and driven with a pump of the recirculating, elevating, vacuum, or other type that moves fluid volumes that can be optionally be passed through a filter (applicable to the broad range of known filters), preferably a standard sand filter and then it is driven towards the heat exchanger between the primary circuit device and the secondary circuit device. This water from the primary circuit device works in the most critical condition at 0+ °C, for a tank that being in contact with the ground and air does not receive solar radiation. On the other hand, if the tank receives solar radiation, it works in a better condition over 0+ °C. The water in the tank may operate keeping its liquid state at a temperature slightly over 0 °C, which for this invention is described as 0+ °C.

In order to obtain and transfer the energy to the property in caloric terms, the hydrothermal heat pump between the devices of the secondary and tertiary circuits extracts between 1 °C and 3 °C from the circulating flow through the heat exchanger between the primary circuit device and the secondary circuit device. Thereby one of the objectives of this invention is kept which is a low approach factor.

Through the Carnot principle this energy is transferred to the tertiary circuit device increasing the temperature.

Depending on the requirements, in real thermostatting terms, the work is done in a range between 5 °C up to 80 °C for air conditioning, preferably 35 °C for heating and up to 60°C for sanitary hot water. Now, if it is a cooling cycle the work can be done in a range of 20 °C to -5 °C, preferably at 10 °C for cooling keeping the conditions for sanitary hot water.

The fluid inside the tertiary circuit device that obtains the energy through the temperatures previously mentioned is recirculated through the irradiation circuits such as heating slab, radiators and/or a water volume to temper, thus transferring the heat energy to the environment for the property in the case of heating or transferring the heat energy to a water volume such as a heated swimming pool.

### Process description for sanitary water heating

In the case of sanitary hot water, the heating process of the facility near the water container previously described is activated where the tertiary circuit device circulates through a copper coil inside an accumulation tank that contains the drinking water to be heated, thereby obtaining the comfortable temperature of 45 °C to 60 °C.

### Cooling process description of the facility near the water container

The modular Hydrothermal system has the capacity of reversing the heat transfer cycle; this is a standard quality of the heat pumps, that is specifically done with a command in the heat pump control where the working cycle is reversed by modifying the flow in the heat pump itself as a result of the movement of the four ways valve that is part of it, so in summer season the Modular Hydrothermal system complies with the function of cooling a structure or a home transferring the energy from inside the structure to the water container such as a swimming pool with two important effects, the structure is cooled generating a comfortable environment in hot times and at the same time it tempers the water in the container (swimming pool) making it more pleasant for its use. On the other hand, this same process can be used to cool specific areas in a facility, with the capacity of reaching temperatures below zero depending on the isolation of the specific space to cool.

That is, by keeping all circulating flows of the primary circuit device, of the secondary and tertiary circuit devices, the energy of the facility is obtained and is transferred towards the water container.

### Description of the mixed operation process

In describing the mixed operation there are a couple of important combinations for the user which are: the heating of sanitary water plus the heating of the close facility or, on the other hand the heating of sanitary water plus the cooling of the close facility.

In this mixed operation process, the control system is programmed to activate two linked processes, the heating of sanitary water followed by the process of heating of the close facility or the heating of sanitary water followed by the cooling of the close facility.

The mixed operation is characterized by the automatic actuation of two processes, one after the other, being these processes the same ones described in the individual mode.

The technical problems this technology solves are:
- It allows energy savings for heating and normal and sanitary hot water.
- It allows energy savings for the cooling of specific areas or of water.

This is because for each 1,000 kilocalories of consumption of the electricity system, between 3,000 to 5,000 kilocalories are transferred as a minimum energy to the facility or fluid to thermostate. This difference in kilocalories is explained in virtue of the extraction of the same from the container or natural water source.
- It does not produce contamination both inside and outside the structure.
- It allows using a water container or natural water source existing as energy source.
- One single system provides heating, cooling and sanitary hot water.
- It can replace combustion equipment as boilers and water heater.
- Uses the same elements existent to transfer the heat radiation.
- The same element used to irradiate heat is used to generate cooling
- It is a modular system that comes ready to be connected to some existent system that has a water container or natural water source and a close structure.
- A system that allows recovering minimum between 3 to 5 times the amount of energy in Kcal to thermostate a building or fluid container supplying just 1 time the amount of energy necessary to make the system work.

### Spare parts replacement procedure

All the parts and pieces can be interchangeable.

The main replacement element because of its exposure to the environment given by the water in the container or the water from a natural source is the heat exchanger located between the primary and the secondary circuits.

The procedure to make this replacement is:
- Turn the system off;
- Empty the primary and secondary circuits;
- Disconnect the entries and the exits of the exchanger;
- Replace with a new exchanger or clean the existent one with a chemical product.
- Reconnect the entries and exits of the exchanger;
- Fill in the secondary circuit with antifreeze fluid previously defined; and
- Turn on the recirculation pump of the primary circuit.

### Example for the application of the system

### Application example 1

The first application case corresponds to a 180 m² house to thermostate with a 34 m³ swimming pool that does not receive solar radiation during winter with 0.5 m³ daily consumption of sanitary hot water.

The water of the swimming pool is sucked up with a ½ hp Jacuzzi® pump, the water passes through a Jacuzzi® quartz sand filter. The filter is passed through PVC (polyvinyl chloride) 50 mm pipes towards the heat exchanger between the primary and secondary circuits designed specifically for this purpose. In order to obtain an almost instantaneous exchange and with a low approach factor, a heat exchanger with a 450,000 Kcal exchange capacity was used.

The flow of the primary circuit device with the equipment previously mentioned is 1.6 litres per second.

Once the Kilocalories are transferred through the first exchanger they are sent by the secondary circuit device with a 0.08 hp recirculation pump towards the heat pump with a 12 KW transfer capacity equivalent to 10,318 Kcal. The heat pump has a design that includes: a compressor that compresses or expands the gas to transfer the energy, in this case it is a Sanyo® compressor of the screw type; internal exchanger circuits, in this case a tube-in-tube, resistant to corrosion and wear and easy thermal conduction, typically the external tube made of seamless stainless steel and the internal tube of copper; 4-way internal gas flow ball type Teflon control valves; the control mother plate that provides digital control actuating on the compressor commanding the start-up or stop, acts on the 4-way valve for the internal gas transfer control using R410A gas and heat or cold thermal cycle control; in order to control the thermal changes the pump has temperature measuring sensors located in each fluid flow entry and exit point.

For this example, the temperature measuring ranges in winter in the sensors are:
- Primary circuit device between 0 °C and 8 °C
- Secondary circuit device between 0 °C and 8 °C
- Tertiary circuit device between 30 °C and 40 °C

The fluid inside the secondary circuit device is a mixture of water with 30% propylene glycol with a freezing support capacity of up to -10 °C.

The heat pump obtains its calories inside the secondary circuit device and transfers them to the tertiary circuit device that for this particular case the tertiary circuit device has to objectives: the first a 100 m² heating slab of the house and secondly a 0.5 m³ sanitary water container.

The tertiary circuit device contains drinking water moved through a 0.1 hp Wilo® recirculation pump through 19 mm pipes.

The tertiary circuit device for this case is also connected with the 0.5 m³ tank by means of a 12.7 mm copper coil that allows the transfer of heat to the sanitary water in the tank.

The condition described above is to heat a house in reverse mode modifying with the control device the internal cycle of the heat pump, cold is injected to the house with the tertiary circuit device and in turn heat is injected in the swimming pool with the primary circuit device achieving the temperate of the swimming pool.

### Application example 2

The second application case is for a 350 m² house to thermostate with a 27 m³ swimming pool with solar radiation during winter and a daily sanitary hot water consumption of 0.6 m³.

The water in the swimming pool is sucked up with a ¾ hp Jacuzzi® pump that passes through a Jacuzzi ®quartz sand filter. This water is sent to the heat exchanger via 50 mm PVC (polyvinyl chloride) pipes between the primary and secondary circuits, specifically designed for this purpose. In order to obtain an almost instantaneous exchange with a low approach factor a heat exchanger with 450,000 Kcal exchange capacity was used.

The flow of the primary circuit device with the equipment previously mentioned is 1.9 litres per second.

Once the Kilocalories are transferred through the first exchanger they are driven by the secondary circuit device by means of a 0.08 hp recirculation pump towards the heat pump with a 15 KW transference capacity that is equivalent to 12,897 Kcal that has an own design that includes: a compressor to compress or expand the gas to transfer the energy, in this case it is a screw type Sanyo® compressor; internal exchanger circuits, in this case a tube-in-tube the external tube typically made of seamless stainless steel and the internal one made of copper, corrosion and wear resistant with easy thermal conduction; internal 4 way flow control valves of the Teflon ball type; the control mother plate that provides digital control, that acts on the compressor commanding the start-up or stop which acts on the 4 way valve to control the internal gas transfer using R410A gas and heat or cold thermal cycle control; in order to control the thermal changes the pump has temperature measuring sensors located in each fluid flow entry and exit point.

For this example, the temperature measuring ranges in the sensors are:
- Primary circuit device between 0 °C and 8 °C
- Secondary circuit device between 0 °C and 8 °C
- Tertiary circuit device between 30 °C and 50 °C

The fluid inside the secondary circuit device is a mixture of water with 30% propylene glycol with a freezing support capacity of up to -10 °C.

The heat pump obtains its calories inside the secondary circuit device and transfers them to the tertiary circuit device that for this particular case the tertiary circuit device has to objectives: the first a 150 m² heating slab of the house and secondly a 0.6 m³ sanitary water container.

The tertiary circuit device contains drinking water moved through a 0.1 hp Wilo® recirculation pump through 19 mm pipes.

The tertiary circuit device for this case is also connected with the 0.6 m³ tank by means of a 12.7 mm copper coil that allows the transfer of heat to the sanitary water in the tank.

### Application example 3

The third application case corresponds to a 20 feet or 33 m³ container with refrigerated isolation to thermostate between 21 and 25 °C with a 1 m³ plastic IBC (intermediate bulk container) closed water container without using sanitary water.

This container is installed in an area where in winter the temperatures fluctuate between -10 °C and 30 °C and in summer between 10 and 48 °C in the shade.

The water in the IBC is sucked up with a ¼ hp Jacuzzi pump that does not need to go through a filter. This water is sent through 50 mm PVC (polyvinyl chloride) pipes (where it connects directly to the IBC) towards the heat exchanger between the primary and secondary circuits and is specifically designed for this purpose. In order to obtain an almost instantaneous exchange with a low approach factor a heat exchanger with an exchange capacity of 150,000 Kcal was used (this exchanger was chosen for its capacity both of energy transfer and the entrance/exit flow capacity of the exchanger).

The flow of the primary circuit device with the equipment previously mentioned is 1 litre per second. Once the kilocalories are transferred through the first exchanger they are sent by the secondary circuit device with a 0.08 hp recirculation pump towards the heat pump with a 6KW transfer capacity equivalent to 5,159 Kcal, that has an own design including: one compressor to compress or expand the gas to transfer the energy, in this case it is a Sanyo® compressor of the screw type; internal exchanger circuits, in this case a tube-in-tube, resistant to corrosion and wear and easy thermal conduction, typically the external tube made of seamless stainless steel and the internal tube of copper; 4-way internal gas flow ball type Teflon control valves; the control mother plate that provides digital control actuating on the compressor commanding the start-up or stop, acts on the 4-way valve for the internal gas transfer control using R410A gas and heat or cold thermal cycle control; in order to control the thermal changes the pump has temperature measuring sensors located in each fluid flow entry and exit point.

For this example, the temperature measuring ranges in the sensors are:
- Primary circuit device between 0 °C and 8 °C
- Secondary circuit device between 0 °C and 8 °C
- Tertiary circuit device between 15 °C and 25 °C

The fluid inside the secondary circuit device is a mixture of water with 30% propylene glycol with a freezing support capacity of up to -10 °C.

The heat pump obtains its calories from inside the secondary circuit device and transfers them to the tertiary circuit device that in this particular case the tertiary circuit device has one purpose, that is to supply thermostated water to a radiator installed in the floor of the lower part of the container.

The tertiary circuit device contains drinking water moved through a 0.08 hp Wilo® recirculation pump through 19 mm pipes.

### Application example 4

The third application case is a condominium with 100 houses each with 180 m² to thermostate, with a 1,000,000 m³ close lake or pond, which sanitary hot water daily use is 0.5 m³ in each house.

The water in the lake or the pond is sucked up with 10 Jacuzzi® 3 hp pumps that passes through 10 Jacuzzi® quartz sand filters, one for each pump; this water is driven by means of 100 mm PVC (polyvinyl chloride) pipes to 10 heat exchangers, one for each pump, located between the primary and secondary circuits, so as to implement 10 primary circuits and 10 secondary circuits that are designed specifically for this purpose. In order to obtain an almost instantaneous exchange and with a low approach factor, 10 heat exchangers with a 900,000 Kcal exchange capacity each were used.

The flow of the primary circuit device with the equipment previously mentioned is 16 litres per second.

Once the Kilocalories are transferred through each one of the 10 first exchangers, they are sent by the secondary circuit device with a 1 hp recirculation pump towards 10 heat pumps with a 90 KW transfer capacity equivalent to 77,386 Kcal. Each one has an own design that includes: a compressor that compresses or expands the gas to transfer the energy, in this case it is a Sanyo® compressor of the screw type; internal exchanger circuits, in this case a tube-in-tube, typically the external tube made of seamless stainless steel and the internal one made of copper;4-way internal gas flow ball type Teflon control valves; the control mother plate that provides digital control actuating on the compressor commanding the start-up or stop, acts on the 4-way valve for the internal gas transfer control using R410A gas and heat or cold thermal cycle control; in order to control the thermal changes the pump has temperature measuring sensors located in each fluid flow entry and exit point.

For this example, the temperature measuring ranges in the sensors are:
- Primary circuit device between 0 °C and 8 °C
- Secondary circuit device between 0 °C and 8 °C
- Tertiary circuit device between 30 °C and 40 °C

The fluid inside the secondary circuit device is a mixture of water with 30% propylene glycol with a freezing support capacity of up to -10 °C.

Each of the heat pumps that together form a cluster or group of hydrothermal heat pumps, obtain the calories inside the secondary circuit device and transfers them to the tertiary circuit device that in this particular case the tertiary circuit device has two objectives: the first one a 100 m² heating slab and secondly a 0.5 m³ sanitary water container, also for each house.

The tertiary circuit device contains drinking water moved through a 1 hp Wilo® recirculation pump through 19 mm pipes in each house.

In this case, the tertiary circuit device connects also with the 0.5 m³ tank with a 12.7 mm copper coil that allows transferring heat to the sanitary water inside the tank for each house.

### Description of Figures

### Figure 1/13

This figure shows a general scheme of the system with the five devices integrated and working.
1A) Water container. It can be a standard swimming pool, a pond and/or a natural water volume for home or industrial use.
1B) Filter pump or elevation pump
1C) Optional filter
1D) Part of the heat exchanger over sizing the primary circulating device.
2A) Part of the heat exchanger of the secondary circulation device.
2B) Hydrothermal heat pump
3A) Sanitary hot water accumulator tank
3B) Sanitary water entrance
3C) Hydraulic control
4A) Thermal solar collector.
4B) Heating slab

### Figure 2/13

This figure shows a scheme of the primary circuit device.
1A) Water container. It can be a standard swimming pool, a pond and/or a natural water volume for home or industrial use.
1B) Filter pump or elevation pump
1C) Optional filter
1D) Part of the heat exchanger over sizing the primary circulating device
1Da) Plates exchanger working principle (1D-2A), this description shows how the flow moves through the heat exchanger plates.
1Db) A graph shows in grey tones the thermal interaction between the part of the exchanger represented by 1 D and the part of the exchanger represented by 2A.

### Figure 3/13

This figure shows a scheme of the secondary circuit device
2A) Part of the heat exchanger of the secondary circulating device.
2B) Hydrothermal heat pump
2C) Recirculation entry of the fluid from the anti-freezing combination to the heat pump 2B of the secondary circuit device.
2D) Recirculation entry of the fluid from the anti-freezing combination from the heat pump 2B to the part of the heat exchanger 2B.
2E) Recirculation pump of the secondary circuit device.
2F) Exit of the recirculating fluid from the heat pump 2B to the coil of the sanitary hot water accumulator tank 3A. (In a heating operation of the house and sanitary water)
2G) Entry of the recirculating fluid from the coil of the sanitary hot water accumulator tank 3A to the heat pump 2B. (In a heating operation of the house and sanitary water)
2H) Exit of the recirculating fluid from the heat pump 2B to the heating slab 4B. (In a heating operation of the house and the sanitary water).
2I) Entry of the recirculating fluid from the heating slab 4B to the heat pump 2B (In a heating operation of the house and the sanitary water).
2J) Recirculation pump of the tertiary circuit device for sanitary hot water.
2K) Recirculation pump of the tertiary circuit device to heat the building.

### Figure 4/13

This figure shows the internal detail of the hydrothermal heat pump with its entries and exits.
1D) Part of the heat exchanger of the primary transference device
2A) Part of the heat exchanger of the secondary circulating device
7A) Compressor of the heat pump.
7C) Expansion valve
7E) Four-way valve
7F) Gas evaporation
7G) Gas condensation
7L) Three-way valve for sanitary hot water handling
7LL) Three-way valve to handle the house heating
3D) Sanitary water exit to the tank 3A.
3E) Heating water exit to the heating slab
3F) Arrival of the sanitary water to the heat pump 2B.
3G) Arrival of the heating slab heating water to the heat pump 2B.

### Figure 5/13

This figure shows a scheme of the tertiary circuit device.
2J) Recirculation pump of the tertiary circuit device for sanitary hot water
2K) Recirculation pump of the tertiary circuit device to heat the building
3A) Sanitary hot water accumulator tank.
3B) Sanitary water entry.
3C) Hydraulic control.
3D) Sanitary water exit to the tank 3A.
3E) Heating water exit to the heating slab
3F) Arrival of sanitary water to the heat pump 2B.
3G) Arrival of the heating slab heating water to the heat pump 2B.
3H) Solar collector circuit pump.
4A) Thermal solar collector.
4B) Heating slab

### Figure 6/13

This figure shows a scheme of the control device.
C) Controller.
1B) Elevation pump or filter pump.
2E) Secondary circuit device recirculation pump.
2J) Recirculation pump of the tertiary circuit device for sanitary hot water.
2K) Recirculation pump of the tertiary circuit device to heat the building.
3H) Solar collector circuit pump.
2B) Hydrothermal heat pump
ST1) Fluid temperature sensor at the entry of the accumulating tank 3A.
ST2) Fluid temperature sensor at the exit of the accumulating tank 3A.
ST3) Fluid temperature sensor at the entrance to the sanitary hot water circuit.
ST4) Fluid temperature sensor at the exit of the sanitary hot water circuit.
ST5) Fluid temperature sensor at the entry of the heat pump 2B of the secondary circuit device.
ST6) Fluid temperature sensor at the exit of the heat pump 2B to the secondary circuit device.
ST7) Fluid temperature sensor at the entry of the heating circuit 4B.
ST8) Fluid temperature sensor at the exit of the heating circuit 4B.
TA) Environment temperature sensor

### Figure 7/13

This figure shows the gas flow schemes inside the heat pump in its two possible layouts. The upper drawing shows the pump in a heating cycle, on the other hand the lower drawing shows a pump in a refrigerating cycle.
7A) Heat pump compressor
7B) Heat exchanger between secondary circuit and heat pump.
7C) Expansion valve.
7D) Heat exchanger between the heat pump contained in the secondary system device and the tertiary circuit device.
7E) Four-way valve
7F) Gas evaporation
7G) Gas condensation
7H) External heat entrance of the secondary circuit from the primary circuit device. (Swimming pool cooling and house heating function).
7I) Heat exit from the heat pump to the secondary circuit device to the tertiary circuit device. (Swimming pool cooling and house heating function).
7J) Exit of external heat of the secondary circuit to the primary circuit device. (Swimming pool cooling and house heating function).
7K) Entry of external heat to the heat pump of the secondary circuit from the tertiary circuit device. (Swimming pool cooling and house heating function).

### Figure 8/13

This figure shows the logic activation and deactivation order of the different devices of the system when in a heating cycle of an infrastructure.
MT) In the control device the operation is set in Temper Mode.
D-TRI) Defining the reference temperature of the infrastructure (temperature to be reached in the infrastructure).
A-BR-CT) Actuating of the recirculation pump for thermostatting the infrastructure of the tertiary circuit.
L-CT-E) Reading of the entry of heating slab tertiary circuit temperature.
L-CT-S) Reading of the exit of the heating slab tertiary circuit temperature.
E-60s) One minute or 60 seconds pause.
AP-BC) Heat pump turn off
AP-BR-CP) Primary circuit recirculation pump turn off.
AP-BR-CS) Secondary circuit recirculation pump turn off.
CT-E) Entry temperature of the heating slab tertiary circuit.
TRI) Reference temperature of the infrastructure (temperature to be reached in the infrastructure).
CT-S) Temperature of the tertiary circuit exit from the heating slab.
A-BR-CP) Actuating of the primary circuit recirculation pump
A-BR-CS) Actuating of the secondary circuit recirculation pump.
ΔTT) Temperature difference of the tertiary circuit
E-10s) 10 seconds pause.
CS-E) Temperature of the secondary circuit entrance to the heat pump.
CS-S) Temperature of the secondary circuit exit from the heat pump.
ΔTS) Temperature difference of the secondary circuit
A-BC) Heat pump actuating.

### Figure 9/13

This figure shows the logic activation and deactivation order of the different devices of the system when in a cooling cycle of an infrastructure.
ME) In the control device the operation is set in Cool Mode.
D-TRI) Defining the reference temperature of the infrastructure (temperature to be reached in the infrastructure).
A-BR-CT) Actuating of the recirculation pump for thermostatting the infrastructure of the tertiary circuit.
L-CT-E) Reading of the entry of the heating slab tertiary circuit temperature.
L-CT-S) Reading of the exit of the heating slab tertiary circuit temperature.
E-60s) One minute or 60 seconds pause.
AP-BC) Heat pump turn off
AP-BR-CP) Primary circuit recirculation pump turn off.
AP-BR-CS) Secondary circuit recirculation pump turn off.
CT-E) Temperature of the tertiary circuit entrance to the heating slab.
CT-S) Temperature of the tertiary circuit exit from the heating slab.
ΔTT) Temperature difference of the tertiary circuit.
TRI) Reference temperature of the infrastructure (temperature to be reached in the infrastructure).
A-BR-CP) Actuating of the primary circuit recirculation pump
A-BR-CS) Actuating of the secondary circuit recirculation pump.
E-30s) 30 seconds pause.
CS-E) Temperature of the secondary circuit entrance to the heat pump.
CS-S) Temperature of the secondary circuit exit from the heat pump.
ΔTS) Temperature difference of the secondary circuit
A-BC) Heat pump actuating.

### Figure 10/13

This figure shows the logic activation and deactivation order of the different devices of the system when in a sanitary hot water heating cycle.
M-ACS) In the control device the operation is set in Sanitary Hot Water Mode.
D-TTR) Defining the reference temperature of the sanitary hot water tank.
A-BR-CTA) Actuating of the recirculation pump for thermostatting the sanitary hot water of the tertiary circuit.
AP-BC) Heat pump turn off
AP-BR-CP) Primary circuit recirculation pump turn off
AP-BR-CS) Secondary circuit recirculation pump turn off.
AP-BR-CTA) Turn off of the tertiary circuit sanitary hot water recirculation pump.
TTR) Reference temperature of the sanitary hot water tank.
(TTAC) Hot Water Tank temperature
A-BR-CP) Actuating of the primary circuit recirculation pump
A-BR-CS) Actuating of the secondary circuit recirculation pump.
E-30s) 30 seconds pause
CS-E) Temperature of the secondary circuit entrance to the heat pump.
CS-S) Temperature of the secondary circuit exit from the heat pump.
ΔTS) Temperature difference of the secondary circuit
L-CS-E) Reading of the secondary circuit temperature entrance to the heat pump.
L-CS-S) Reading of the secondary circuit temperature exit from the heat pump
CTA-S) Tertiary circuit sanitary hot water exit temperature.
TAM) Maximum hot water temperature.
A-BC) Heat Pump actuating.

### Figure 11/13

This figure shows a stacked diagram where ordinate axis is the number of kilocalories used to temper the target, for this figure: to the left of the graph a house presented in the application example 1; to the right of the graph a 33 m³ container presented in application example 2. On the other hand, the abscissa axis shows the two application examples and the comparative outputs between having or not this system integrated in the energy consumption in Kcal.
E1) Application example 1 and experimental result 1.
E3) Application example 3
SC) Conventional system
HD) Modular Hydrothermal

### Figure 12/13

This figure shows a stacked diagram where the ordinates axis is the number of kilocalories used to temper the target, in this case it is the thermostatting of a 350 m² house of the application example 2. On the other hand, the abscissa axis shows the application example 2 and the comparative outputs between having or not this system integrated in the energy consumption in Kcal.
E2) Application example 2 and experimental result 2.
SC) Conventional system
HD) Modular Hydrothermal.

### Figure 13/13

This figure shows a stacked diagram where the ordinates axis is the number of kilocalories used to temper the target, in this case it is the thermostatting of 100 houses, each of 180 m² of the application example 4. On the other hand, the abscissa axis shows the application example 4 and the comparative outputs between having or not this system integrated in the energy consumption in Kcal.
E4) Application example 4.
SC) Conventional system
HD) Modular Hydrothermal

### Experimental results

Experimental result 1:
- 350 m² house, 30 m³ swimming pool in contact with the ground, the air and with enough solar radiation.

∘ 24-hour operation in heating mode obtaining a temperature inside the building of between 20,5 °C to 21,5 °C.
o The temperature of the swimming pool measured on June 20^{th} is 4.5 °C.
o All together and in parallel operation 600 litres of hot water per day are obtained that cover the needs of a family of 6 and 2 independent workers.
∘ The average monthly consumption in winter for 24 hours heating and the production of 600 litres daily sanitary hot water is 1,629,189 Kcal, compared to a monthly consumption without the system of this invention of 9,286,380 Kcal, with over 80% savings.

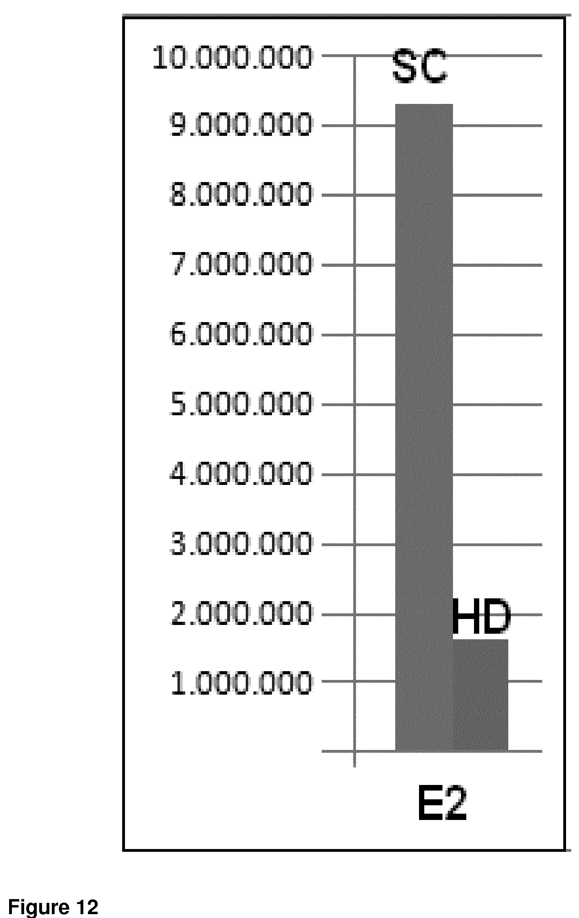

This can be graphically seen in figure 12/13 in E3.

Experimental result 2
- 180 m² house, 34 m³ swimming pool in contact with the ground, the air and without solar radiation during winter.

∘ 8 hours operation in heating mode obtaining a temperature inside the building of between 18 °C to 19 °C.
∘ The temperature of the swimming pool measured on June 20^{th} is 2 °C in Santiago de Chile.
∘ All together and in parallel operation 500 litres of sanitary hot water per day covering the needs of a family of 6 is obtained.
∘ The average monthly consumption in winter for 8 hours heating and 500 litres of hot water is 619,092 Kcal with the modular hydrothermal, compared to a historic monthly consumption of 3,405,006 Kcal without the system, with over 80% savings.

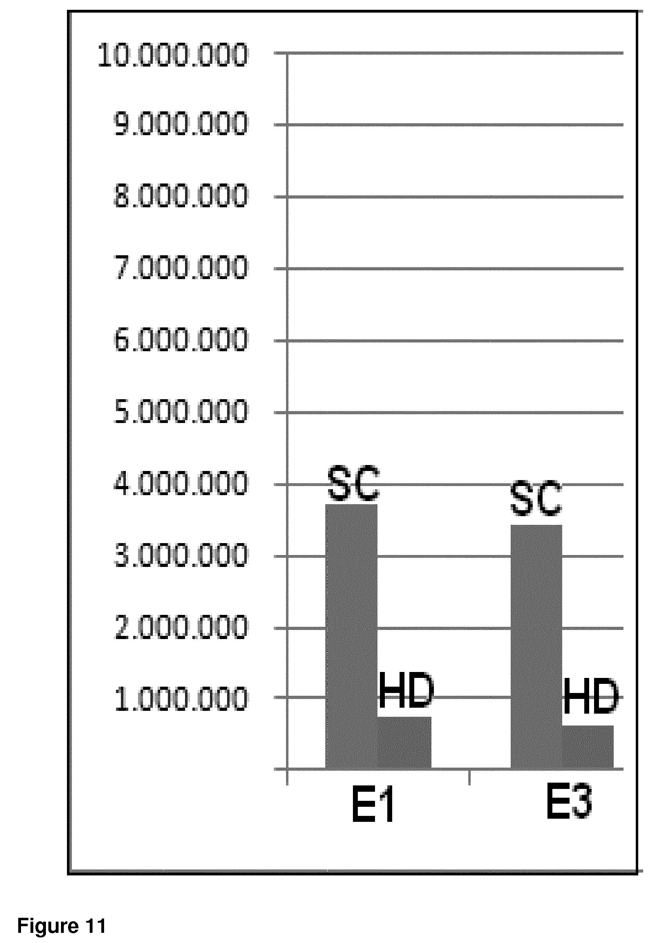

This can be graphically seen in figure 11/13 in E1.

The previous Kcal calculation is based in the transformation of m³ of natural gas to its equivalent in kilocalories and of electricity to its equivalent in kilocalories for its use in heating.

These equivalencies are:
1 m3 gas: 9,300 Kcal.
1 KW / h electricity: 860 Kcal.

Typically, in the other trials made with these systems previously described the tertiary circuit device can work up to 12 °C to decrease the environmental temperature up to approximately 21 °C and at the same time a tempering of the water of the swimming pool of up to approximately 29 °C as per these trials.

## Claims

1. Modular hydrothermal system with the capacity of extracting heat energy from water, comprising the following devices:
- primary circuit device that extracts energy from the water source and transfers it to a secondary circuit device;
- secondary circuit device that takes energy from the primary circuit device and transfers it to a heat pump which in turn transfers this energy to the tertiary circuit device;
- tertiary circuit device that depending whether it is solely for heating will channel the energy to elements aimed for that purpose otherwise it will provide energy for the thermostatting of sanitary hot water which may or not be helped in an auxiliary way with an auxiliary device;
- auxiliary device that helps with the necessary energy contribution for the sanitary hot water;
- control device which capability is coordinating all the devices previously mentioned.

2. Modular hydrothermal system with the capacity of extracting heat energy from water of claim 1 wherein all the heat exchangers in the system incorporated in the different devices must have a low approach factor in order to produce a fast energy exchange with an exchange ratio within the range of between 1 °C to 100 °C, preferably from 1 °C to 3 °C.

3. Modular hydrothermal system with the capacity of extracting heat energy from water of claim 1 wherein the energy transfer is done with all the filling elements of the liquid state devices except for the heat pump which has a gas component.

4. Modular hydrothermal system with the capacity of extracting heat energy from water of claim 1 wherein the energy transfer is done with all the filling elements of the devices with a constant flow and flow rate depending on what the system requires.

5. Modular hydrothermal system with the capacity of extracting heat energy from water of claim 1 wherein all its parts are interchangeable.

6. Modular hydrothermal system with the capacity of extracting heat energy from water of claim 5 wherein the interchangeable parts are preferably within the primary circuit device.

7. Primary circuit device of claim 1 comprising a water volume (1A); alternatively, a filter (1 B) a water circulating pump (1 C); and one part of the heat exchanger (1D).

8. Primary circuit device of claim 7, wherein the water volume may or not be watertight, preferably watertight, may or not be buried although it is preferably buried, such as swimming pools, ponds, IBC (intermediate bulk container for transporting bulk products).

9. Primary circuit device of claim 7, wherein the water volume may or not be watertight, preferably not watertight, may or not be buried, although preferably buried such as rivers, lakes, sea, artificial ponds.

10. Primary circuit device of claim 7, wherein the water volume operates up to a water temperature slightly over the freezing point, i.e. slightly over 0 °C, named as 0°C+.

11. Primary circuit device of claim 7, comprising a filter prior to the water circulating pump; this filter retains impurities present in the water.

12. Primary circuit device of claim 11 comprising a filter prior to the water circulating pump, preferably a sand filter.

13. Primary circuit device of claim 7, **characterized in that** it does not have a filter prior to the water circulating pump.

14. Primary circuit device of claim 7, wherein the exchanger part of this circuit does not put the liquid of the primary circuit device in contact with the liquid of the secondary circuit device; it just transfers energy in the form of kilocalories.

15. Primary circuit device of claim 14 **characterized in that** its capacity to achieve an instant energy transfer is over-sized and with a low approach factor.

16. Secondary circuit device of claim 1 comprising: one part of the heat exchanger (2A); a liquid not freezing at temperatures and a heat pump (2B).

17. Secondary circuit device of claim 16, wherein the heat exchanger part (2A) has its capacity over-sized to achieve an instant energy transfer and with a low approach factor.

18. Secondary circuit device of claim 16 wherein this circuit works with an antifreeze liquid such as mixtures of water with antifreeze, antifreeze alone, oils, liquid silicones, liquefied gases, special liquids for heat exchange.

19. Secondary circuit device of claim 16, wherein the heat pump (2B) is resistant to abrasion and mechanic stress comprising: a compressor (7A), internal exchange circuits (7F, 7G), gas flow control valves of 3 and/or 4 ways (7E, 7L, 7LL), a digital control mother plate (C) and temperature control sensors (ST1 to ST8 and TA).

20. Secondary circuit device of claim 19, wherein the heat pump encompasses a compressor such as of screw and/or of piston.

21. Secondary circuit device of claim 20, wherein the heat pump encompasses a screw compressor (7A).

22. Secondary circuit device of claim 19 comprising internal exchange circuits such as tube, tube-in-tube, welded plates, plates and shell tube.

23. Secondary circuit device of claim 22 comprising the internal exchanger circuits that are tube-in-tube (7F, 7G)

24. Secondary circuit device of claim 19, wherein the gas flow control valves of 3 and/or 4 ways are preferably ball and/or electromagnetic valves (7E, 7L, 7LL).

25. Tertiary circuit device of claim1, comprising: the part of the heat exchanger of the heat pump which connects to the radiant elements (3D, 3E, 3F, 3G), circulating pumps (2K, 2J), the liquid that goes in the tertiary circuit, the radiant element of the construction (4B) and/or a hot water accumulation tank (3A) and/or another water volume and/or another application in an area to thermostate.

26. Tertiary circuit device of claim 25, where the liquid contained in the tertiary circuit can be solely water and/or a liquid with the same characteristics of the one used in the secondary circuit.

27. Tertiary circuit device of claim 25 comprising a thermal-radiant element in the construction such as heating slab and/or wall radiators (4B), connected to the exit of the heat pump (3D, 3E, 3F, 3G).

28. Tertiary circuit device of claim 25, wherein the sanitary hot water comprises an internal coil in a hot water accumulation tank (3A) connected to the exit of the heat pump (3D, 3E, 3F, 3G).

29. Auxiliary device of claim 1 comprising elements to aid in thermostatting sanitary hot water until reaching the temperature for its use, these elements comprising a circulating pump (3H) and thermostatting equipment of solar water such as solar panels (4A).

30. Control device of claim 1 comprising: a digital control mother plate that has a program or algorithm stored which actuates on the compressor (7A), commanding the start-up or stop; actuating on the valves of 3 or 4 ways for controlling the transfer of the internal gas of the heat pump (7E), (7L), (7LL) and for controlling the heat or cold thermal cycle; actuates on the recirculation pump of the primary circuit (1C) commanding the start-up or stop; actuates on the recirculation pump of the secondary circuit (2E) commanding the start-up or stop; actuates on the recirculation pump of the tertiary circuit (2K) commanding the start-up or stop; actuates on the recirculation pump of the tertiary circuit of the sanitary hot water (2J) commanding the start-up or stop; and actuates on the recirculation pump of the auxiliary device (3H) commanding the start-up or stop; and on the other hand all the changes are perceived by the system through temperature sensors arranged at the entrances and exits of the different devices.

31. Control device of claim 30, wherein the automatic control is designed so that all ingoing and outgoing temperatures of each primary, secondary and tertiary circuit is kept with a low approach factor, between 1 °C and 15 °C.

32. Control device of claim 31 wherein the automatic control is designed so that all ingoing and outgoing temperatures of each primary, secondary and tertiary circuit is kept with a low approach factor, preferably between 1 °C and 5 °C.

33. Method to operate the heating of an infrastructure with the system described in claim 1 comprising the steps of:
a.- In the control device the operator positions the operation in Temper Mode.;
b.- The operator defines the reference temperature of the infrastructure (temperature expected to be reached in the infrastructure);
c.- The recirculation pump is actuated automatically for thermostatting the infrastructure of the tertiary circuit;
d.- The control device automatically reads the temperatures of the heating slab entry tertiary circuit and the heating slab exit tertiary circuit.
e.- Timeout;
f.- The control device distinguishes whether the ingoing temperature of the heating slab is equal or higher than the reference temperature of the infrastructure;
g.- If the temperature difference noted in point (f) is equal or higher, the heat pump, the recirculation pump of the primary circuit, the recirculation pump of the secondary circuit turn off automatically;
h.- If the temperature difference noted in point (f) is lower, the recirculation pump of the primary circuit and the recirculation pump of the secondary circuit are actuated.
i.- The control device automatically reads again the temperatures of the heating slab secondary circuit entry and the heating slab secondary circuit exit;
j.- The control device distinguishes whether the temperatures difference between the exit of the tertiary circuit of the heating slab minus the temperature at the entry of the tertiary circuit of the heating slab is equal or higher than the temperature difference of the tertiary circuit (previously defined as per the area to thermostate).
k.- If the temperature difference indicated in point (j) is equal or higher, the heat pump, the recirculation pump of the primary circuit, the recirculation pump of the secondary circuit are automatically turned off.
I.- If the temperature difference indicated in point (j) is lower a timeout is produced;
II.- The control device distinguishes whether the difference between the temperatures of the entry secondary circuit to the heat pump minus the temperature of the exit secondary circuit of the heat temperature is equal or higher to the temperature difference of the secondary circuit (previously defined as per the area to thermostate).
n.- If the temperature difference indicated in point (II) is equal or higher, the heat pump, the recirculation pump of the primary circuit, the recirculation pump of the secondary circuit are automatically turned off.
m. If the temperature difference indicated in point (II) is lower, the heat pump is actuated; and
ñ Again the control device distinguishes whether the ingoing temperature of the heating slab is equal or higher to the reference temperature of the infrastructure noted in point (f) and thereby the control device keeps the control of the system.

34. Method to operate the cooling of an infrastructure with the system described in claim 1 comprising the steps of:
a.- In the control device the operator positions the operation in Cooling Mode.;
b.- The operator defines the reference temperature of the infrastructure (temperature expected to be reached in the infrastructure);
c.- The recirculation pump is actuated automatically for thermostatting the infrastructure of the tertiary circuit;
d.- The control device automatically reads the temperatures of the heating slab entry tertiary circuit and the heating slab exit tertiary circuit.
e.- Timeout;
f.- The ingoing temperature of the heating slab is lower than the reference temperature of the infrastructure;
g.- If the temperature difference noted in point (f) is lower, the heat pump, the recirculation pump of the primary circuit, the recirculation pump of the secondary circuit turn off automatically;
h.- If the temperature difference noted in point (f) is equal or higher, the recirculation pump of the primary circuit and the recirculation pump of the secondary circuit are actuated;
i.- Timeout;
j.- The control device automatically reads again the temperatures of the entry tertiary circuit of the heating slab and of the exit tertiary circuit of the heating slab;
k.- The control device distinguishes whether the difference between the temperatures of the entry tertiary circuit of the heating slab minus the temperature of the exit tertiary circuit of the heating slab is equal or higher to the difference of temperature of the tertiary circuit (previously defined as per the area to thermostate),
I.- If the temperature difference indicated in point (k) is equal or higher, the heat pump, the recirculation pump of the primary circuit and the recirculation pump of the secondary circuit are automatically turned off.
II.- If the temperature difference indicated in point (k) is lower, the control device automatically reads the temperatures of the heating slab entry secondary circuit and of the heating slab exit secondary circuit;
n.- Timeout;
m.- The control device distinguishes whether the difference between the temperatures of the exit secondary circuit of the heat pump minus the temperature of the entry secondary circuit of the heat pump is equal or higher to the difference of the temperature of the secondary circuit (previously defined as per the area to thermostate);
ñ.- If the temperature difference indicated in point (m) is equal or higher, the heat pump, the recirculation pump of the primary circuit and the recirculation pump of the secondary circuit are automatically turned off.
o.- If the temperature difference indicated in point (m) is lower, the heat pump is actuated; and
p.- Again the control device distinguishes whether the ingoing temperature of the heating slab is below the reference temperature of the infrastructure noted in point (f) and thereby the control device keeps the control of the system.

35. Method to operate the thermostatting of sanitary hot water with the system described in claim 1 comprising the steps of:
a. In the control device the operator positions the operation in Sanitary Hot Water Mode;
b. The operator defines the reference temperature of the sanitary hot water tank;
c. The recirculation pump is automatically actuated for thermostatting the sanitary hot water of the tertiary circuit;
d. The control device distinguishes whether the reference temperature of the sanitary hot water is higher or equal to the sanitary hot water tank;
e. If the temperature difference noted in point (d) is higher or equal, the heat pump, the recirculation pump of the primary circuit, the recirculation pump of the secondary circuit and the sanitary hot water recirculation pump of the tertiary circuit are automatically turned off.
f. If the temperature difference noted in point (d) is lower the recirculation pump of the primary circuit and the recirculation pump of the secondary circuit are activated;
g. Timeout;
h. The control device distinguishes whether the difference between the temperatures of the entry secondary circuit to the heat pump minus the temperature of the exit of the secondary circuit of the heat pump is equal or higher to the temperature difference of the secondary circuit (previously defined as per the area to thermostate).
i. If the temperature difference noted in point (h) is equal or higher, the heat pump, the recirculation pump of the primary circuit, the recirculation pump of the secondary circuit and the sanitary hot water recirculation pump of the tertiary circuit turn off automatically.
j. If the temperature difference noted in point (h) is lower, the control device automatically reads the temperatures of the entry secondary circuit of the heating slab and the exit secondary circuit of the heating slab;
k. The control device distinguishes whether the difference between the exit temperatures of the sanitary hot water of the tertiary circuit is equal or higher to the maximum hot water temperature (previously defined as per the optimal temperature for sanitary use);
I. If the temperature difference noted in point (k) is equal or higher, the heat pump, the primary circuit recirculation pump, the secondary circuit recirculation pump and the tertiary circuit sanitary hot water recirculation pump turn off automatically.
II. If the temperature difference noted in point (j) is lower, the heat pump is activated, and
m. Again the control device distinguishes whether the reference temperature of the sanitary hot water is equal or higher than the temperature of the sanitary hot water tank noted in point (d) and consequently the control device keeps control of the system.
